## Europäisches Patentamt
## European Patent Office
## Office européen des brevets

(11) Numéro de publication : **0 278 825 B1**

(12) **FASCICULE DE BREVET EUROPEEN**

(45) Date de publication du fascicule du brevet.:
27.02.91 Bulletin 91/09

(21) Numéro de dépôt : **88400146.2**

(22) Date de dépôt : **22.01.88**

(51) Int. Cl.⁵ : **G01C 25/00**, G01C 15/00, G01B 11/26

(54) **Procédé et outillage pour l'alignement d'équipements à bord d'un véhicule porteur et particulièrement à bord d'un aéronef.**

(30) Priorité : 26.01.87 FR 8700869

(43) Date de publication de la demande :
17.08.88 Bulletin 88/33

(45) Mention de la délivrance du brevet :
27.02.91 Bulletin 91/09

(84) Etats contractants désignés :
**DE GB IT NL SE**

(56) Documents cités :
US-A- 3 552 859
US-A- 3 990 796
US-A- 4 031 630
US-A- 4 134 681

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Rochette, Marc**
**6 Résidence des Peupliers Ave. du Colonel Schuler**
**F-13100 Aix En Provence (FR)**

(74) Mandataire : **Bonnetat, Christian et al**
**CABINET BONNETAT 23, Rue de Léningrad**
**F-75008 Paris (FR)**

**Description**

La présente invention concerne un procédé et un outillage pour l'alignement d'équipements à bord d'un véhicule porteur et particulièrement à bord d'un aéronef.

On sait que certains équipements embarqués à bord d'un véhicule doivent occuper des positions fixes et précises les uns par rapport aux autres et/ou par rapport à un système de référence de ce véhicule. Ces équipements sont, par exemple pour un aéronef, ceux qui sont destinés à la navigation, tels que la centrale inertielle, les gyromètres ou les accéléromètres, ou bien à la détection, tels qu'un radar, ou bien encore au combat, tels que des armes et leur système de visée. On dit que ces équipements doivent être "alignés" sur le système de référence du véhicule et que leurs positionnements respectifs doivent être "harmonisés".

Dans l'état actuel de la technique, on connaît essentiellement deux méthodes d'alignement :

a) la première consiste à implanter les équipements dans des parties réglables de racks, dont les parties fixes sont solidaires du véhicule. L'alignement mécanique de ces parties réglables de racks (et donc desdits équipements) intervient pendant la phase d'installation des équipements à bord. Une telle méthode est généralement mise en oeuvre pour l'alignement des centrales inertielles montées sur avions ou hélicoptères.

Cette première méthode nécessite des mesures longues et compliquées pour déterminer, à l'aide de points de référence solidaires de la structure du véhicule et de mires ou de niveaux, l'axe longitudinal dudit véhicule, ainsi que le plan horizontal de référence de celui-ci.

Pour ce faire, on utilise un système de mesure à distance pourvu de théodolites.

On remarquera que, dans la mise en oeuvre de cette première méthode d''alignement :

– les mesures doivent être effectuées pour chaque équipement à aligner ;

– ces mesures indiquent l'ampleur des mésalignements des équipements par rapport aux références du véhicule et impliquent des opérations mécaniques de correction de positionnement, propres à chaque équipement, jusqu'à ce que tous lesdits équipements soient "alignés" sur les références de l'aéronef. Il en résulte des opérations longues et délicates.

b) la seconde méthode d'alignement prévoit de réaliser, lors de la construction de la structure du véhicule, un plan de pose précis et d'y disposer l'équipement lors de la phase d'installation de celui-ci. Cette méthode est souvent utilisée pour la mise en place des radars Doppler et des gyroscopes de verticale dans les avions et les hélicoptères.

On remarquera que cette seconde méthode implique, lors de la construction de la structure de l'aéronef, l'alignement mécanique précis d'un outillage de référence. Cet outillage, une fois aligné et immobilisé, permet l'usinage précis du plan de pose et le perçage dans ce dernier d'alésages de positionnement destinés à recevoir des pions de centrage solidaires de l'équipement.

Ainsi, lorsque cette seconde méthode est utilisée, elle nécessite la réalisation d'autant de plans de pose qu'il y a d'équipements à aligner.

La mise en oeuvre de cette seconde méthode est donc également longue, complexe et onéreuse.

La présente invention a pour objet de remédier aux inconvénients des méthodes d'alignement connues rappelées ci-dessus et de permettre l'alignement d'équipements à bord de véhicules pourvus de calculateurs, et particulièrement à bord d'aéronefs, lorsque lesdits équipements travaillent en liaison avec ces calculateurs, ce qui est toujours le cas pour les aéronefs modernes.

A cette fin, selon l'invention, le procédé pour l'alignement d'un équipement à bord d'un véhicule porteur équipé d'au moins un calculateur travaillant en liaison avec ledit équipement, ce procédé mettant en oeuvre un système de mesure à distance à théodolite, est remarquable en ce que :

– on dispose à bord dudit véhicule un outillage de référence représentatif du système d'axes de référence dudit véhicule ;

– on dispose à bord dudit véhicule, à l'emplacement devant être occupé par ledit équipement, un outillage spécifique représentatif dudit équipement ;

– on mesure par l'intermédiaire dudit système de mesure à distance, qui est choisi de type informatique, les paramètres de positionnement dudit outillage spécifique représentatif dudit équipement par rapport audit outillage de référence ;

– on enregistre lesdits paramètres de positionnement dans une mémoire ;

– on associe ladite mémoire audit calculateur ; et

– on substitue exactement ledit équipement audit outillage spécifique.

On voit ainsi que, selon la présente invention, on ne cherche pas, comme dans les méthodes connues, à aligner rigoureusement de façon mécanique ledit équipement sur les axes de référence du véhicule. On se contente de mesurer les paramètres de mésalignement et de les indiquer au calculateur, qui est alors capable d'effectuer des calculs de changement d'axes, pour tenir compte de ce mésalignement. En quelque sorte, on remplace les opérations mécaniques d'alignement, par un alignement informatique.

On remarquera que :

– ledit outillage de référence représentatif du système d'axes de référence dudit véhicule peut être fixé à demeure ou bien seulement pendant la durée des mesures des mésalignements sur la structure dudit véhicule. Sa solidarisation peut être effectuée de toutes façons appropriées et, notamment, conformément à la seconde méthode connue rappelée ci-dessus, en mettant en oeuvre un plan de pose précis lié à la structure du véhicule. On notera cependant que, grâce à l'invention, il n'y a pas à réaliser autant de plans de pose qu'il y a d'équipements à positionner et que seule la réalisation d'un plan de pose pour ledit outillage de référence est nécessaire. En effet, quel que soit le nombre des équipements à positionner dans le véhicule, les mesures des paramètre relatifs à chacun d'eux peuvent s'effectuer, équipement après équipement, à l'aide d'un unique outillage de référence. Cet unique outillage de référence permet de connaître avec précision le positionnement de chaque équipement par rapport aux axes de références du véhicule et donc les positionnements relatifs des équipements entre eux.

– ledit outillage spécifique représentatif dudit équipement peut être monté dans un rack. Cependant, grâce à l'invention, ce rack n'a pas besoin de comporter une partie mobile réglable par rapport à une partie fixe, comme cela était le cas pour la mise en oeuvre de la première méthode connue. En effet, le procédé selon l'invention permet de supprimer les opérations mécaniques de correction des mésalignements, qui étaient nécessaires dans cette méthode connue.

– il existe sur le marché de nombreux systèmes de mesure à distance informatiques, susceptibles d'être utilisés pour la mise en oeuvre du procédé selon l'invention. De tels systèmes sont par exemple fabriqués et vendus par la société américaine HEWLETT PACKARD, ainsi que par la société suisse WILD HEERBRUGG et la société allemande ERNST LEITZ WETZLAR. Ils comportent généralement deux théodolites électroniques reliés à un calculateur spécifique.

– la mémoire dans laquelle on enregistre les paramètres de positionnement du ou des équipements à positionner peut être de tout type connue et être incorporée au calculateur de l'aéronef ou bien constituer une unité amovible. On remarquera qu'en cas de pluralité d'équipements, cette mémoire, lorsque avantageusement elle est unique, constitue une véritable fiche d'identification des équipements du véhicule correspondant.

Ainsi, un outillage conforme à l'invention et destiné à mettre en oeuvre le procédé décrit ci-dessus comporte un outillage de référence susceptible d'être mis en place dans le véhicule et spécialement dans l'aéronef de façon à matérialiser le système d'axes de références de celui-ci et un outillage spécifique représentatif de l'équipement à positionner et susceptible d'être mis en place dans le véhicule à l'emplacement dudit équipement.

Bien entendu lorsqu'il y a plusieurs équipements à aligner, il est avantageux de prévoir un outillage de référence unique et une pluralité d'outillages spécifiques, respectivement représentatifs desdits équipements.

Dans un mode de réalisation avantageux, ledit outillage de référence et chacun desdits outillages spécifiques représentatifs desdits équipements sont pourvus respectivement de cubes optiques ou analogues susceptibles de matérialiser respectivement les axes de référence dudit véhicule et les axes de référence desdits équipements.

Les figures du dessin annexé feront bien comprendre comment l'invention peut être réalisée. Sur ces figures, des références identiques désignent des éléments semblables.

La figure 1 montre schématiquement, à bord d'un hélicoptère, un équipement devant occuper une position précise par rapport aux axes dudit hélicoptère.

La figure 2 illustre schématiquement le procédé conforme à l'invention de détermination du positionnement dudit équipement.

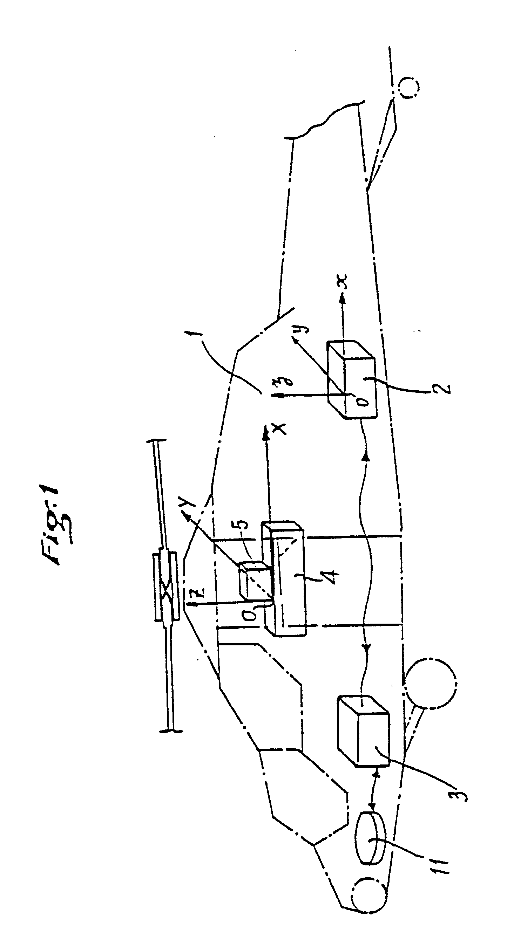

Sur ces figures, on a représenté schématiquement, en traits mixtes, la silhouette d'un hélicoptère 1. A bord de cet hélicoptère doivent être montés une pluralité d'équipements 2, dont un seul est représenté et auxquels sont respectivement associés des systèmes d'axes de référence ox, oy, oz. Chacun de ces équipements 2 doit occuper une position fixe déterminée, par rapport aux axes de référence OX, OY et OZ dudit hélicoptère 1. Par ailleurs, lesdits équipements 2 sont destinés à travailler en liaison avec un calculateur 3, disposé à bord de l'hélicoptère 1 (voir la figure 1).

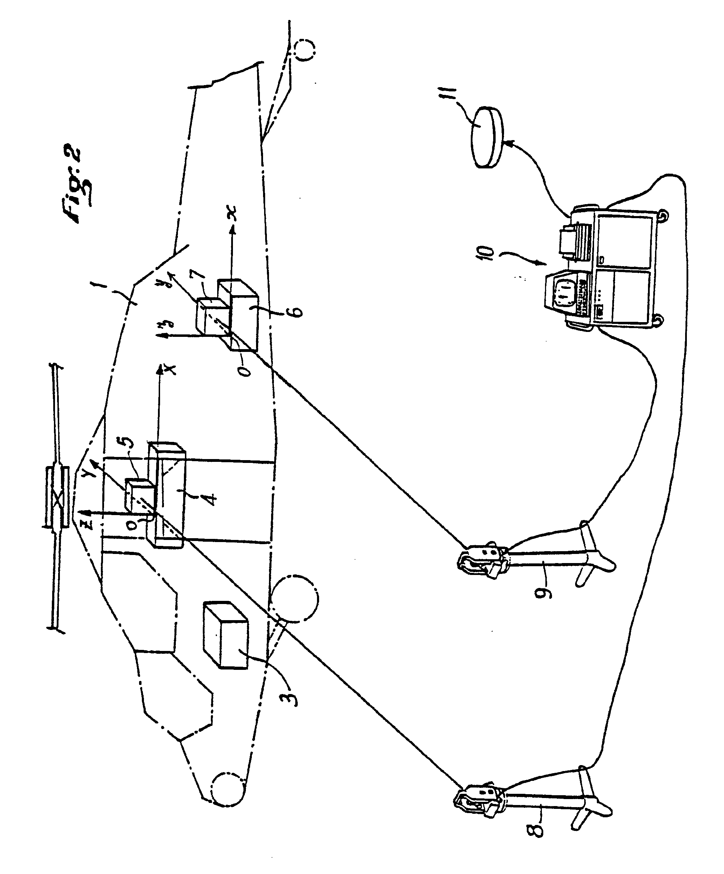

Pour matérialiser le système des axes de référence OX, OY et OZ de l'hélicoptère 1, on réalise et on met en place un outillage de référence 4, pourvu d'un cube optique 5 (figure 2). De même, pour matérialiser les systèmes des axes de référence ox, oy et oz des équipements 2, on réalise des outillages spécifiques 6, pourvus chacun d'un cube optique 7. Ces outillages 6,7 sont mis à la place respective que doivent occuper lesdits équipements.

Ensuite, grâce à un système informatique de mesure à distance comportant deux théodolites électroniques 8 et 9 et un calculateur 10 (voir la figure 2), on détermine les paramètres de positionnement de chacun desdits outillages 6 par rapport à l'outillage de référence 4. Cette détermination est obtenue, selon une procédure connue et non décrite ci-après, par visée des cubes optiques 5 et 7, respectivement par les théodilites électroniques 8 et 9. Ces paramètres de positionnement, calculés par le calculateur 10, sont enregistrés dans une mémoire 11.

Ensuite, les outillages 6, et éventuellement l'outillage 4, sont démontés et les équipements 2 sont exactement substitués à l'outillage spécifique 6 associé. Par suite, les paramètres de positionnement desdits outillages 6 enregistrés dans la mémoire 11 deviennent les paramètres de positionnement respectifs desdits équipements 2.

Ainsi, lorsque la mémoire 11 est associée au calculateur 3 travaillant en liaison avec les équipements 2, ledit calculateur 3 connaît les paramètres de positionnement de chacun de ces derniers par rapport aux axes de référence OX, OY et OZ de l'hélicoptère 1 et peut en tenir compte dans les informations qu'il reçoit desdits équipements 2 et dans les ordres qu'il adresse à ceux-ci.

Bien entendu, les mesures concernant chaque équipement 2 sont effectués, équipement par équipement.

On pourrait concevoir que les paramètres de positionnement concernant spécifiquement un équipement 2 soient adressés à une mémoire 11 spécifique, elle-même associée à un calculateur 3 spécifique. Toutefois, il est avantageux, afin de constituer une véritable fiche d'identification d'équipements relative à l'aéronef 1, que la mémoire 11 soit commune à tous les équipements 2 et que cette mémoire soit associée à un calculateur 3 en liaison avec chacun de ceux-ci.

**Revendications**

1. Procédé pour l'alignement d'un équipement (2) à bord d'un véhicule (1) équipé d'au moins un calculateur (3) travaillant en liaison avec ledit équipement (2), ce procédé mettant en oeuvre un système de mesure à distance à théodolite, caractérisé en ce que :
   – on dispose à bord dudit véhicule (1) un outillage de référence (4) représentatif du système d'axes de référence (OX, OY, OZ) dudit véhicule (1) ;
   – on dispose à bord dudit véhicule (1), à l'emplacement devant être occupé par ledit équipement (2), un outillage spécifique (6) représentatif dudit équipement (2) ;
   – on mesure par l'intermédiaire dudit système de mesure à distance (8, 9, 10), qui est choisi de type informatique, les paramètres de positionnement dudit outillage spécifique (6) représentatif dudit équipement (2) par rapport audit outillage de référence (4) ;
   – on enregistre lesdits paramètres de positionnement dans une mémoire (11) ;
   – on associe ladite mémoire (11) audit calculateur (3) ; et
   – on substitue exactement ledit équipement (2) audit outillage spécifique.

2. Procédé selon la revendication 1, mis en oeuvre pour l'alignement d'une pluralité d'équipements (2), caractérisé en ce que les mesures des paramètres de positionnement des différents équipements par l'intermédiaire des outillages spécifiques correspondants sont réalisées successivement, équipement après équipement, à l'aide d'un unique outillage de référence (4).

3. Procédé selon la revendication 1, mis en oeuvre pour l'alignement d'une pluralité d'équipements (2), caractérisé en ce que l'enregistrement des paramètres de positionnement des différents équipements par l'intermédiaire desdits outillages spécifiques correspondants est réalisé dans une mémoire unique (11).

4. Procédé selon la revendication 3, caractérisé en ce que ladite mémoire unique (11) est associée à un calculateur unique (3) en liaison avec l'ensemble desdites équipements (2).

5. Outillage pour l'alignement d'un équipement (2) à bord d'un véhicule et particulièrement d'un aéronef (1) équipé d'au moins un calculateur (3) travaillant en liaison avec ledit équipement (2), ledit outillage étant destiné à être utilisé conformément au procédé spécifié sous l'une quelconque des revendications 1 à 4, caractérisé en ce qu'il comporte :
   – un outillage de référence (4) susceptible d'être mis en place dans le véhicule (1) de façon à matérialiser le système d'axes de référence (OX, OY, OZ) dudit véhicule (1) ; et
   – un outillage spécifique (6) représentatif de l'équipement (2) à positionner et susceptible d'être mis en place dans le véhicule (1) à l'emplacement dudit équipement (2).

6. Outillage selon la revendication 5, destiné à l'alignement d'une pluralité d'équipements (2) différents, caractérisé en ce qu'il comporte un outillage de référence unique (4) et une pluralité d'outillages spécifiques (6) respectivement représentatifs desdits équipements (2).

7. Outillage selon l'une des revendications 5 ou 6, caractérisé en ce que ledit outillage de référence (4) et chaun desdits outillages spécifiques (6) sont respectivement pourvus de cubes optiques ou analogues (5 ou 7), susceptibles de matérialiser respectivement les axes de référence (OX, OY, OZ) dudit véhicule (1) et les axes de référence (ox, oy, oz) desdits équipements (2).

**Ansprüche**

1. Verfahren zum Alignieren eines Ausrüstungsteils (2) an Bord eines Fahrzeugs (1), das mit mindestens einem Rechner (3) ausgerüstet ist, der in Verbindung mit diesem Ausrüstungsteil (2) arbeitet, bei welchem Verfahren ein Fernmeßsystem mit Theodolit eingesetzt wird, dadurch gekennzeichnet :
   – daß an Bord des Fahrzeugs (1) eine Referenzvorrichtung (4) vorgesehen ist, die das Referenzachsensystem (OX, OY, OZ) des Fahrzeugs (1) darstellt ;

– daß an Bord des Fahrzeugs (1), an dem Platz, der vorher von dem Ausrüstungsteil (2) eingenommen wurde, eine Spezialvorrichtung (6) vorgesehen ist, die den Ausrüstungsteil (2) darstellt;

– daß mittels des Fernmeßsystems (8, 9, 10), das als informatisches System konzipiert ist, die Stellungsparameter der Spezialvorrichtung (6), welche den Ausrüstungsteil (2) darstellt, in bezug auf die Referenzvorrichtung (4) gemessen werden ;

– daß die Stellungsparameter in einen Speicher (11) eingegeben werden ;

– daß der Speicher (11) an den Rechner (3) angeschlossen wird ; und

– daß die Spezialvorrichtung durch den Ausrüstungsteil (2) exakt ersetzt wird.

2. Verfahren nach Anspruch 1, eingesetzt zum Alignieren mehrerer Ausrüstungsteile (2), dadurch gekennzeichnet, daß die Messungen der Stellungsparameter der verschiedenen Ausrüstungsteile mittels der entsprechenden Spezialvorrichtungen aufeinanderfolgend, ein Ausrüstungsteil nach dem anderen, ausgeführt werden mit Hilfe einer einzigen Referenzvorrichtung (4).

3. Verfahren nach Anspruch 1, eingesetzt zum Alignieren mehrerer Ausrüstungsteile (2), dadurch gekennzeichnet, daß die Stellungsparameter der verschiedenen Ausrüstungsteile, nachdem sie mittels der entsprechenden Spezialvorrichtungen erfaßt worden sind, in einen einzigen Speicher (11) eingegeben werden.

4. Verfahren nach Anspruch 3, dadurch gekennzeichnet, daß der einzige Speicher (11) an einen einzigen Rechner (3) angeschlossen ist, der mit allen Ausrüstungsteilen (2) in Verbindung steht.

5. Vorrichtung zum Alignieren eines Ausrüstungsteils (2) an Bord eines Fahrzeugs, insbesondere eines Luftfahrzeugs (1), das mit mindestens einem Rechner (3) ausgerüstet ist, der in Verbindung mit diesem Ausrüstungsteil (2) arbeitet, wobei die Vorrichtung dazu bestimmt ist, unter Anwendung des Verfahrens nach einem der Ansprüche 1 bis 4 verwendet zu werden, dadurch gekennzeichnet, daß vorgesehen sind :

– eine Referenzvorrichtung (4), die sich dazu eignet, in das Fahrzeug (1) derart eingefügt zu werden, daß sie das Referenzachsensystem (OX, OY, OZ) des Fahrzeugs (1) verkörpert ; und

– eine Spezialvorrichtung (6) zum Aufstellen in dem Fahrzeug, welche das Ausrüstungsteil (2) darstellt und zum Plazieren in dem Fahrzeug (1) an der Stelle des Ausrüstungsteils (2) geeignet ist.

6. Vorrichtung nach Anspruch 5 zum Alignieren mehrerer verschiedener Ausrüstungsteile (2), dadurch gekennzeichnet, daß eine einzige Referenzvorrichtung (4) und mehrere Spezialvorrichtungen (6) vorgesehen sind, welch letztere die entsprechenden Ausrüstungsteile (2) darstellen.

7. Vorrichtung nach einem der Ansprüche 5 oder 6, dadurch gekennzeichnet, daß die Referenzvorrichtung (4) und jede der Spezialvorrichtungen (6) mit je einem optischen Würfel oder dergleichen (5 oder 7) versehen ist, welche Würfel sich dazu eignen, die Referenzachsen (OX, OY, OZ) des Fahrzeugs (1) beziehungsweise die Referenzachsen (ox, oy, oz) der Ausrüstungsteile (2) zu verkörpern.

## Claims

1. Method for aligning a piece of equipment (2) on board a vehicle (1) equipped with at least one computer (3) working in connection with said piece of equipment (2), this method using a theodolite distance measuring system, characterized in that :

– a reference assembly (4) representative of the reference axis system (OX, OY, OZ) of said vehicle (1) is disposed on board said vehicle (1) ;

– a specific assembly (6) representative of said equipment (2) is disposed on board said vehicle (1), at the position to be occupied by said equipment (2),

– by means of said distance measuring system (8, 9, 10) which is of the data processing type, the parameters for positioning said specific assembly (6) representative of said equipment (2) with respect to said reference assembly (4) are measured ;

– said positioning parameters are stored in a memory (11) ;

– said memory (11) is associated with said computer (3), and

– said equipment (2) is substituted exactly for said specific assembly.

2. Method according to claim 1, used for aligning a plurality of pieces of equipment (2), characterized in that the measurements of the parameters for positioning the different pieces of equipment by means of the corresponding specific assemblies are made successively, piece of equipment after piece of equipment, using a single reference assembly (4).

3. Method according to claim 1, used for aligning a plurality of pieces of equipment (2), characterized in that the parameters for positioning the different pieces of equipment via said corresponding specific assemblies are stored in a single memory (11).

4. Method according to claim 3, characterized in that said single memory (11) is associated with a single computer (3) in connection with the whole of said pieces of equipment (2).

5. Assembly for aligning a piece of equipment (2) on board a vehicle and particularly on board an aircraft (1) equipped with at least one computer (3) working in connection with said piece of equipment (2), said assembly being intended to be used in accordance with the method specified under any one of claims 1 to 4, characterized in that it comprises :

– a reference assembly (4) positionable in the vehicle (1) so as to materialize the reference axis system (OX, OY, OZ) of said vehicle (1) ; and

– a specific assembly (6) representative of the piece of equipment (2) to position and positionable in the vehicle (1) at the position of said equipment (2).

6. Assembly according to claim 5, intended for aligning a plurality of different pieces of equipment (2), characterized in that it comprises a single reference assembly (4) and a plurality of specific assemblies (6) respectively representative of said pieces of equipment (2).

7. Assembly according to one of claims 5 or 6, characterized in that said reference assembly (4) and each of said specific assemblies (6) are respectively provided with optical cubes or similar (5 or 7), capable of materializing respectively the reference axes (OX, OY, OZ) of said vehicle (1) and the reference axes (ox, oy, oz) of said pieces of equipment (2).

Fig:1

EP 0 278 825 B1

Fig. 2